# FASCICULE DE BREVET EUROPEEN

(11) **EP 3 423 249 B1**
(45) Date de publication et mention de la délivrance du brevet: **29.04.2020**
(21) Numéro de dépôt: 17712210.8
(22) Date de dépôt: 02.03.2017
(51) Int. Cl.: B29B 11/16, B29C 53/56, B29C 70/32, B29C 53/82, B29C 53/80

(54) **INSTALLATION ET PROCÉDÉ POUR LA FORMATION D'UNE PRÉFORME FIBREUSE DE RÉVOLUTION PRÉSENTANT EN SECTION RADIALE UN PROFIL ÉVOLUTIF**
ANLAGE UND VERFAHREN ZUR HERSTELLUNG EINER AXIALSYMMETRISCHEN FASERIGEN ROHRFORM MIT EINEM SICH HERAUSBILDENDEN PROFIL IM RADIALEN ABSCHNITT
INSTALLATION AND METHOD FOR FORMING AN AXISYMMETRIC FIBROUS PREFORM EXHIBITING, IN RADIAL SECTION, A PROFILE THAT EVOLVES

(30) Priorité: 02.03.2016 FR 1651748
(43) Date de publication de la demande: 09.01.2019
(73) Titulaire: Safran Aircraft Engines, 75015 Paris (FR)
(72) Inventeur: FABRE, Hubert, Jean, Marie, 77550 Moissy-Cramayel (FR); ASHTARI, Nicolas, 77550 Moissy-Cramayel (FR); HELLOT, Jérémy, 77550 Moissy-Cramayel (FR); TECHER, Marc-Emmanuel, 77550 Moissy-Cramayel (FR)
(74) Mandataire: Cabinet Beau de Loménie
(86) Numéro de dépôt international: PCT/FR2017/050469
(87) Numéro de publication internationale: WO 2017/149251

(56) Documents cités:
- EP-A1- 2 497 625
- GB-A- 2 486 230
- NL-A- 7 704 199
- NL-A- 7 704 199
- US-A1- 2009 294 567
- US-A1- 2009 294 567
- US-A1- 2014 113 088
- US-A1- 2014 113 088

## Description

### Arrière-plan de l'invention

La présente invention concerne la mise en forme de préformes fibreuses par enroulement d'une texture fibreuse obtenue par tissage tridimensionnel (3D) ou multicouche de structures fibreuses de renfort de pièces en matériau composite.

L'invention concerne plus particulièrement les préformes fibreuses destinées à former des renforts de pièces en matériau composite de révolution présentant en section radiale un profil évolutif (variation de forme et ou d'épaisseur) tel que par exemple un carter de soufflante de moteur aéronautique. La préforme fibreuse d'une telle pièce est réalisée par tissage d'une texture fibreuse et enroulement sous tension de cette texture sur un moule de révolution comportant une surface d'enroulement ayant en section radiale un profil en relief correspondant au profil de la pièce à fabriquer.

Afin de réaliser une texture fibreuse adaptée à la forme évolutive du moule d'injection, on utilise un tissage en forme, encore appelé « contour weaving » ou « outline weaving », qui consiste à appeler une longueur différente de fils de chaîne en fonction de leur position sur la largeur de la texture fibreuse tissée sous forme de bande de manière à obtenir des rapports entre les longueurs de fils de chaîne (direction tangentielle) similaires aux rapports entre les rayons définissant le profil évolutif de la pièce finale à fabriquer.

La texture fibreuse ainsi tissée est stockée sur un mandrin de stockage pour être ultérieurement enroulée sous tension sur un moule d'injection de révolution comportant une surface d'enroulement ayant en section radiale un profil en relief correspondant au profil de la pièce à fabriquer. La mise sous tension de la texture lors de son enroulement sur le moule est réalisée par le mandrin de stockage encore appelé mandrin « take-up », un ou plusieurs rouleaux suiveurs étant placés entre le mandrin de stockage et le moule d'injection. Le ou les rouleaux suiveurs présentent sur leur largeur axiale un rayon variable définissant une surface externe à profil en relief qui permet de conserver les rapports de longueurs de fils définis lors du tissage entre le mandrin de stockage et le moule d'injection.

Cependant, lors de la formation de la préforme fibreuse sur le moule, la texture fibreuse est enroulée sur elle-même plusieurs fois. A chaque tour d'enroulement, le rapport entre les différents rayons définissant le profil en relief change en fonction des couches de texture fibreuse déjà enroulées. Ces changements de profil sont d'autant plus grands que les ratios de forme et/ou d'épaisseur dans la pièce finale sont importants. Or, le procédé de mise en forme décrit ci-avant ne permet d'entrainer en tension la texture fibreuse que selon un seul profil en relief, c'est-à-dire suivant des rayons dont le rapport en section transversale est fixe.

Lors de son enroulement sur le moule d'injection, la texture fibreuse se décadre en raison des différences entre le profil tissé et le profil réel sur lequel elle est enroulée, ce qui entraîne des pertes de tension à certaines positions axiales dans la texture. Ces déséquilibres de tension dans la largeur de la pièce peuvent entraîner de nombreux défauts comme des vagues, des flambements de fibres, des pincements de fibres, des zones de surépaisseurs non désirées et des taux volumiques de fibres hors spécification. Ces déséquilibres de tension compliquent également la mise en forme par enroulement de la texture fibreuse en entraînant notamment la formation de plis ou de désalignements, ce qui augmente la pénibilité et le temps de la mise en forme de la texture fibreuse.

US 2009/294567 A1 divulgue une installation et un procédé pour la mise en forme d'une préforme fibreuse de révolution.

### Objet et résumé de l'invention

Il est donc souhaitable de pouvoir réaliser des préformes fibreuses 3D ou multicouches avec un profil en relief qui varie au cours de l'enroulement de la texture afin d'éviter des pertes ou des déséquilibres de tension dans la préforme fibreuse.

A cet effet, selon l'invention, il est proposé une installation pour la mise en forme d'une préforme fibreuse de révolution présentant en section radiale un profil évolutif comprenant un mandrin de stockage destiné à stocker une texture fibreuse en forme de bande enroulée, un ou plusieurs rouleaux suiveurs et un moule de révolution sur lequel la texture fibreuse est destinée à être mise en forme par enroulement, le ou ou les rouleaux suiveurs étant placés entre le mandrin de stockage et le moule de révolution, le mandrin de stockage, chaque rouleau suiveur et le moule présentant sur leur largeur axiale un rayon variable de manière à définir une surface externe ayant un profil en relief, caractérisée en ce qu'au moins un rouleau suiveur comprend une pluralité de secteurs fixés de façon amovible sur la surface externe dudit rouleau suiveur, chaque secteur s'étendant sur une fraction de la circonférence du rouleau suiveur et sur tout ou partie de la largeur axiale dudit rouleau suiveur, chaque secteur présentant en outre au moins une épaisseur déterminée de manière à modifier localement l'épaisseur du profil en relief de la surface externe du rouleau suiveur.

Par l'utilisation de secteurs permettant de modifier localement l'épaisseur du profil en relief de la surface externe d'un ou plusieurs rouleaux suiveurs lors de l'enroulement sous tension de la texture fibreuse sur le moule, l'installation de l'invention permet de mettre en forme de préformes fibreuses à profil évolutif en section radiale dans lesquelles les pertes ou inhomogénéités de tension sont significativement réduites. Par ailleurs, les secteurs de l'invention peuvent également être utilisés pour augmenter localement la tension dans la texture fibreuse, par exemple pour réduire le foisonnement de la préforme dans une zone plus épaisse (pour éviter pincements et flambements).

Ces effets sont visibles lors de l'enroulement de la texture sur le moule pour sa mise en forme. En effet, lors de son enroulement sur le moule, la préforme fibreuse présente peu de défauts (vagues, flambements et/ou pincements de fibres, zones de surépaisseurs non désirées, taux volumiques de fibres hors spécification, plis, désalignements, etc.) par rapport à une préforme fibreuse réalisée selon l'art antérieur où les déséquilibres de tension sont plus importants. On réduit ainsi les arrêts inopinés de la machine d'enroulement habituellement nécessaires pour reprendre les défauts tels que des plis ou effondrement de portions de la texture qui requièrent en outre un retour en arrière de la machine ainsi qu'une intervention d'un ou plusieurs techniciens.

Selon une première caractéristique particulière de l'installation de l'invention, chaque secteur présente une épaisseur variable dans le sens axial. Il est ainsi possible de conserver ou de modifier la variation du rayon du rouleau suiveur.

Selon une deuxième caractéristique particulière de l'installation de l'invention, chaque secteur présente une surface interne ayant une forme correspondant à la partie de la surface externe à profil en relief du rouleau suiveur sur laquelle ledit secteur est fixé. Dans ce cas, on ajuste l'augmentation de la tension sur la partie de la texture fibreuse en contact avec les secteurs.

Selon une troisième caractéristique particulière de l'installation de l'invention, au moins un secteur de la pluralité de secteurs comprend un bord biseauté afin de ne pas mettre la préforme en contact avec une arrête vive du bord d'un premier secteur ajouté sur le rouleau suiveur et d'augmenter progressivement la force d'appel des fils.

L'invention a également pour objet un procédé de mise en forme d'une préforme fibreuse de révolution présentant en section radiale un profil évolutif à partir d'une structure fibreuse obtenue par tissage tridimensionnel ou multicouche entre une pluralité de couches de fils de chaîne liées entre elles par des fils de trame, la texture fibreuse étant mise en forme par enroulement sous tension sur un moule de révolution, la texture fibreuse étant déroulée à partir d'un mandrin de stockage, la texture fibreuse circulant sur un ou plusieurs rouleaux suiveurs placés entre le mandrin de stockage et le moule de révolution, le mandrin de stockage, chaque rouleau suiveur et le moule présentant sur leur largeur axiale un rayon variable de manière à définir une surface externe ayant un profil en relief, caractérisé en ce qu'il comprend, au cours de l'enroulement de la texture fibreuse sur le moule, l'ajout d'une pluralité de secteurs sur la surface externe d'au moins un rouleau suiveur, chaque secteur s'étendant sur une fraction de la circonférence du rouleau suiveur et sur tout ou partie de la largeur axiale dudit rouleau suiveur, chaque secteur présentant en outre au moins une épaisseur déterminée de manière à modifier localement l'épaisseur du profil en relief de la surface externe du rouleau suiveur.

Selon une première caractéristique particulière du procédé de l'invention, chaque secteur s'étend sur une fraction de la circonférence du rouleau suiveur déterminée en fonction de la portion de contact circonférentielle entre la texture fibreuse et la surface externe dudit rouleau d'appel.

Selon une deuxième caractéristique particulière du procédé de l'invention, chaque secteur présente une épaisseur variable dans le sens axial.

Selon une troisième première caractéristique particulière du procédé de l'invention, chaque secteur présente une surface externe ayant une forme correspondant à la partie de la surface externe à profil en relief du rouleau d'appel sur laquelle ledit secteur est fixé.

Selon une quatrième caractéristique particulière du procédé de l'invention, au moins un secteur de la pluralité de secteurs comprend un bord biseauté afin de ne pas mettre la préforme en contact avec une arrête vive du bord d'un premier secteur ajouté sur le rouleau suiveur et d'augmenter progressivement la force d'appel des fils.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'une installation pour la mise en forme d'une texture fibreuse à forme évolutive conformément à un mode de réalisation de l'invention,
- la figure 2 est une vue schématique en perspective montrant l'enroulement d'une texture fibreuse sur un moule d'injection de l'installation de la figure 1,
- la figure 3 est une vue schématique en perspective d'un rouleau suiveur de l'installation de la figure 2,
- la figure 4 est une vue schématique en perspective éclatée du rouleau suiveur de la figure 3,
- la figure 5 est une vue schématique en coupe radiale du rouleau suiveur selon le plan V de la figure 3,
- la figure 6 est une vue schématique en coupe axiale du rouleau suiveur suivant le plan, VI de la figure 5,
- les figures 7 à 9 montrent une séquence de montage de secteurs sur un rouleau suiveur de l'installation de la figure 2, et
- les figures 10 à 13 montrent une séquence de démontage de secteurs sur un rouleau suiveur de l'installation de la figure 2.

### Description détaillée de modes de réalisation

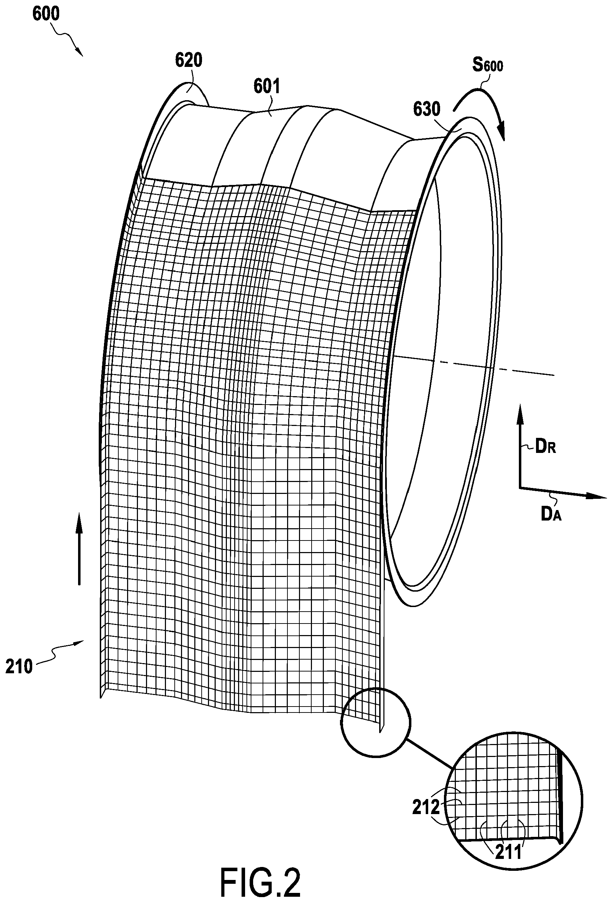

L'invention s'applique d'une manière générale à la réalisation de préformes fibreuses de révolution présentant en coupe radiale un profil évolutif et qui sont aptes à constituer des renforts fibreux, ou préformes, pour la fabrication de pièces en matériau composite de forme de révolution présentant également un profil évolutif et/ou une épaisseur variable notamment en section radiale, la section radiale correspondant à un plan défini par la direction axiale et la direction radiale du moule sur lequel la préforme est mise en forme, telles que la direction axiale DA et la direction radiale DR indiquée que la figure 2. Les pièces sont obtenues par enroulement d'une texture fibreuse sur un moule et injection d'un précurseur de matrice dans la préforme fibreuse ainsi constituée, la matrice étant typiquement une résine.

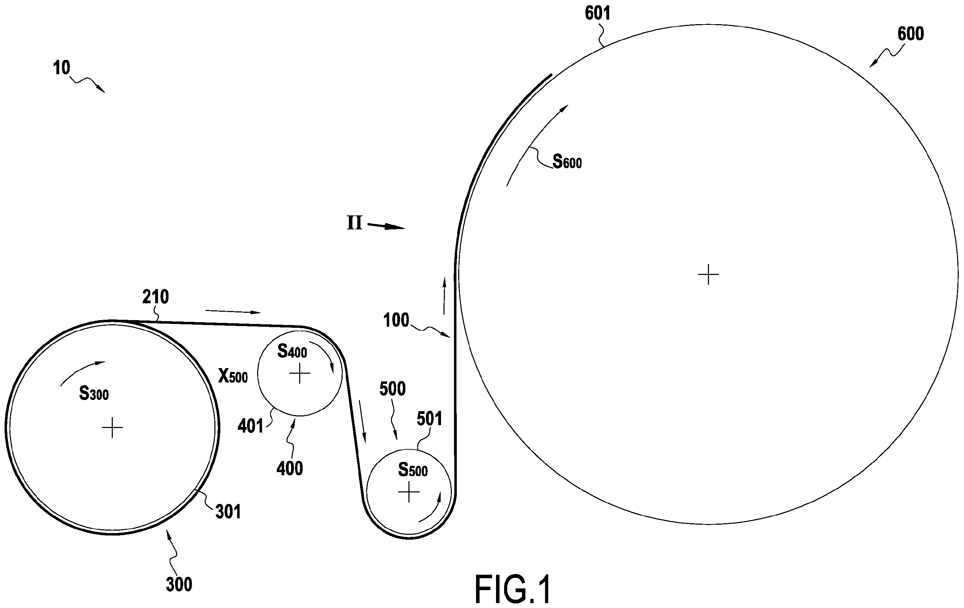

La figure 1 représente une installation 10 pour la mise en forme d'une préforme fibreuse à forme évolutive conformément à un mode de réalisation de l'invention. L'installation 10 comprend un mandrin de stockage 300, deux rouleaux suiveurs 400 et 500 placés en aval du mandrin 300 selon le sens d'enroulement de la texture fibreuse et un moule 600 disposé en aval du rouleau suiveur 500. Une texture fibreuse 210 présente sur le mandrin de stockage 300 est déroulée à partir de celui-ci pour être mise en forme par enroulement sur le moule 600, l'enroulement se faisant sous une tension contrôlée au niveau du mandrin de stockage.

La structure fibreuse 210 est obtenue par tissage tridimensionnel ou par tissage multicouche réalisé de façon connue au moyen d'un métier à tisser de type jacquard sur lequel on a disposé un faisceau de fils de chaînes ou torons en une pluralité de couches, les fils de chaînes étant liés par des fils de trame.

Par "tissage tridimensionnel" ou "tissage 3D", on entend ici un mode de tissage par lequel certains au moins des fils de trame lient des fils de chaîne sur plusieurs couches de chaîne ou inversement. Le tissage 3D peut être de type interlock comme décrit dans le document WO 2006/136755.

Par "tissage multicouche", on désigne ici un tissage 3D avec plusieurs couches de chaîne dont l'armure de base de chaque couche est équivalente à une armure de tissu 2D classique, tel qu'une armure de type toile, satin ou sergé, mais avec certains points de l'armure qui lient les couches de chaîne entre elles ou inversement.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

La structure fibreuse peut être notamment tissée à partir de fils de fibres de carbone, de céramique telle que du carbure de silicium, de verre, ou encore d'aramide.

Afin de réaliser une texture fibreuse adaptée à la forme évolutive de la préforme fibreuse à former sur le moule d'injection, on utilise un tissage en forme, encore appelé « contour weaving », qui consiste à appeler une longueur différente de fils de chaîne en fonction de leur position sur la largeur de la texture fibreuse tissée sous forme de bande. A cet effet, on utilise un ou plusieurs rouleaux d'appel en sortie du métier à tisser qui présentent sur leur largeur axiale un rayon variable définissant une surface externe à profil en relief permettant d'appeler des longueurs de fils de chaîne différentes en fonction de leur position sur la largeur de la texture fibreuse, une plus grande longueur de fil de chaîne étant appelée par la ou les parties d'un rouleau d'appel ayant un rayon plus important que le reste du rouleau. Les appels différentiels réalisés par les rouleaux d'appel se répercutent jusque dans la cellule de tissage du métier à tisser en tirant la bonne longueur de fils de chaîne avant l'insertion de la colonne de fils de trame suivante. La texture ainsi tissée est enroulée sur un mandrin ou tambour de stockage, encore appelé mandrin « take-up », situé en aval des rouleaux d'appel. La texture fibreuse est ainsi stockée en vue en vue de sa mise en forme ultérieure sur un moule.

Comme illustrée sur la figure 2, la préforme fibreuse est mise en forme par enroulement sur un moule d'injection 600 de la texture fibreuse 210 réalisée par tissage tridimensionnel entre une pluralité de fils de chaîne 211 et une pluralité de fils de trame 212, la texture fibreuse formant une bande présentant en section transversale un profil évolutif, c'est-à-dire une variation de forme et/ou d'épaisseur en coupe transversale. Le moule présente en section radiale un profil correspondant à celui de la pièce à réaliser qui correspond dans l'exemple décrit ici à un carter de soufflante de moteur aéronautique.

A cet effet, le moule 600 présente une surface externe 601 dont le profil en relief correspond à la surface interne du carter à réaliser. Par son enroulement sur le mandrin 200, la texture fibreuse 210 épouse le profil de celui-ci. Le moule 600 comporte également deux flasques 620 et 630 pour former des parties de préforme fibreuse correspondant aux brides du carter à fabriquer. Le moule 600 est entraîné en rotation suivant le sens de rotation S₆₀₀, par exemple par un moteur électrique (non représenté sur la figure 2), tandis que la texture fibreuse 210 est mise sous tension entre le mandrin de stockage 300 et le moule 600 par les rouleaux suiveurs 400 et 500.

Les premier et deuxième rouleaux suiveurs 400 et 500 placés en aval du mandrin de stockage 300 sont entraînés suivant respectivement des sens de rotation S₄₀₀ et S₅₀₀ indiqués sur la figure 2. Ils présentent sur leur largeur axiale un rayon variable de manière à définir respectivement des surfaces externes 401 et 501 ayant un profil en relief correspondant au profil visé pour la préforme fibreuse à réaliser.

L'installation 10 comprend en outre un mandrin ou tambour de stockage 300, encore appelé mandrin « take-up », qui est entraîné principalement en rotation suivant le sens de rotation S₃₀₀ et qui présente également sur sa largeur axiale un rayon variable de manière à définir une surface externe 301 ayant un profil en relief correspondant au profil visé pour la préforme fibreuse afin de limiter la déformation de la texture fibreuse 210 lors de son stockage. Le mandrin de stockage 300 assurant la mise sous tension de la texture fibreuse lors de son enroulement, il se peut que la rotation de celui-ci soit momentanément stoppé ou inversée par rapport au sens de rotation S300 afin de maintenir la tension sur la texture lors de son enroulement sur le moule d'injection.

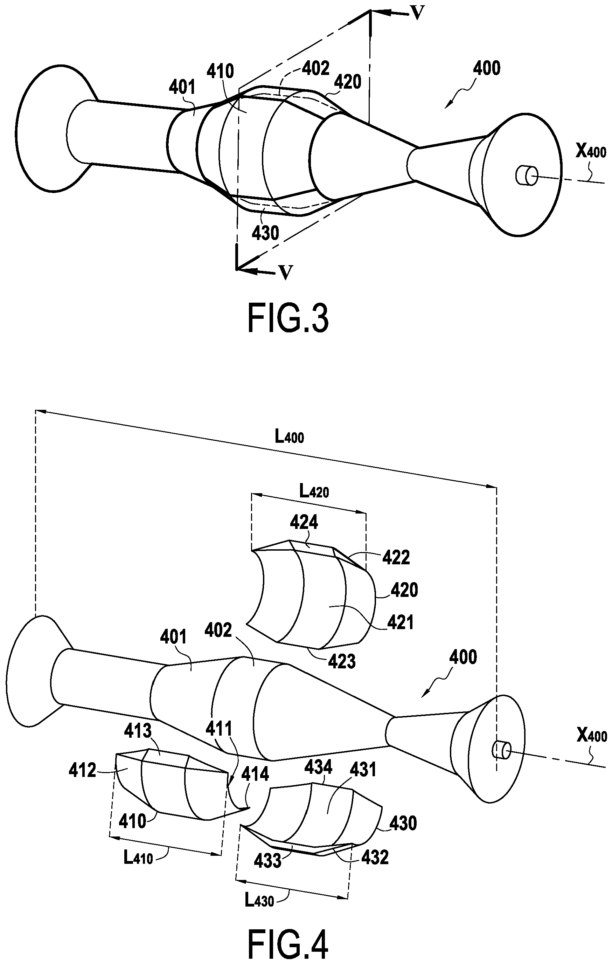

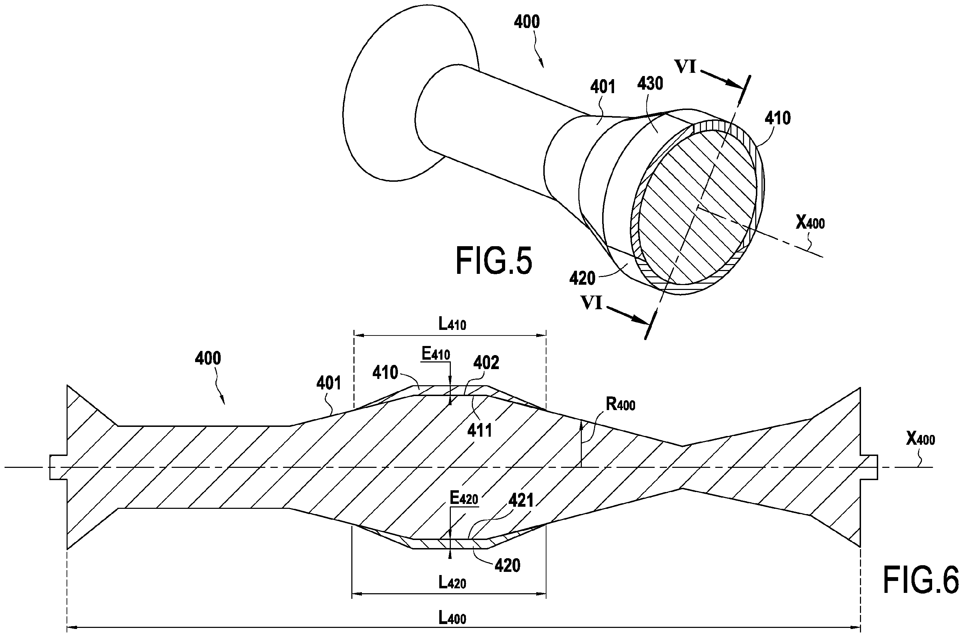

Conformément à l'invention, au moins un rouleau suiveur est muni d'une pluralité de secteurs fixés de façon amovible, par exemple au moyen d'organes de serrage de type vis-écrou ou par emboitement, sur la surface externe du rouleau d'appel, chaque secteur s'étendant sur une fraction de la circonférence du rouleau d'appel et sur tout ou partie de la largeur axiale dudit rouleau d'appel. Dans l'exemple décrit ici et tel qu'illustré sur les figures 3 à 6, le rouleau suiveur 400, qui s'étend axialement suivant un axe X₄₀₀ et dont le rayon R₄₀₀ varie le long de l'axe X₄₀₀ (figure 6), comprend 3 secteurs 410, 420 et 430 comme illustré sur les figures 3 et 4. Toujours dans l'exemple décrit ici, les secteurs 410, 420 et 430 présentent respectivement des largeurs axiales L₄₁₀, L₄₂₀ et L₄₃₀ équivalentes qui sont inférieures à la largeur axiale L₄₀₀ du rouleau suiveur 400, les largeurs axiales étant mesurées dans la direction de l'axe du rouleau comme l'axe X₄₀₀ pour le rouleau suiveur 400. Les secteurs 410, 420, 430 sont destinés à être placés sur une partie 402 du rouleau suiveur 400, partie du rouleau 400 dans laquelle le rayon R₄₀₀ varie sur la largeur axiale L₄₀₀ de manière à définir en section radiale un profil en relief (figure 6). A cet effet, les secteurs 410, 420 et 430 comportent respectivement une surface interne 411, 421 et 431 ayant une forme correspondant à la partie 402 de la surface externe 401 à profil en relief du rouleau suiveur 400 sur laquelle les secteurs sont destinés à être fixés et une surface externe 412, 422 et 432 ayant une forme déterminée en fonction de l'ajustement de tension que l'on souhaite réaliser dans portion de la texture fibreuse en contact avec les secteurs.

Les secteurs 410, 420 et 430 présentent ici respectivement des épaisseurs qui sont variables sur les largeurs axiales L₄₁₀, _{L420} et L₄₃₀ des secteurs 410, 420 et 430, comme montrées sur la figure 6 pour les épaisseurs E₄₁₀ et E₄₂₀ des secteurs 410 et 420. Dans l'exemple décrit ici, la variation des épaisseurs des secteurs 410, 420 et 430 suit principalement la variation du rayon R₄₀₀, et, par conséquent, la forme du profil en relief, sur la partie 402 de manière à modifier localement l'épaisseur du rouleau 400 tout en suivant le profil en relief de la surface externe du rouleau suiveur dans la partie 402. Les secteurs peuvent également ajouter une surépaisseur qui est indépendante de la forme du profil en relief du rouleau.

Une fois muni des secteurs 410, 420 et 430, le rouleau 400 applique une tension plus importante au niveau de la texture fibreuse 210 en contact avec les secteurs.

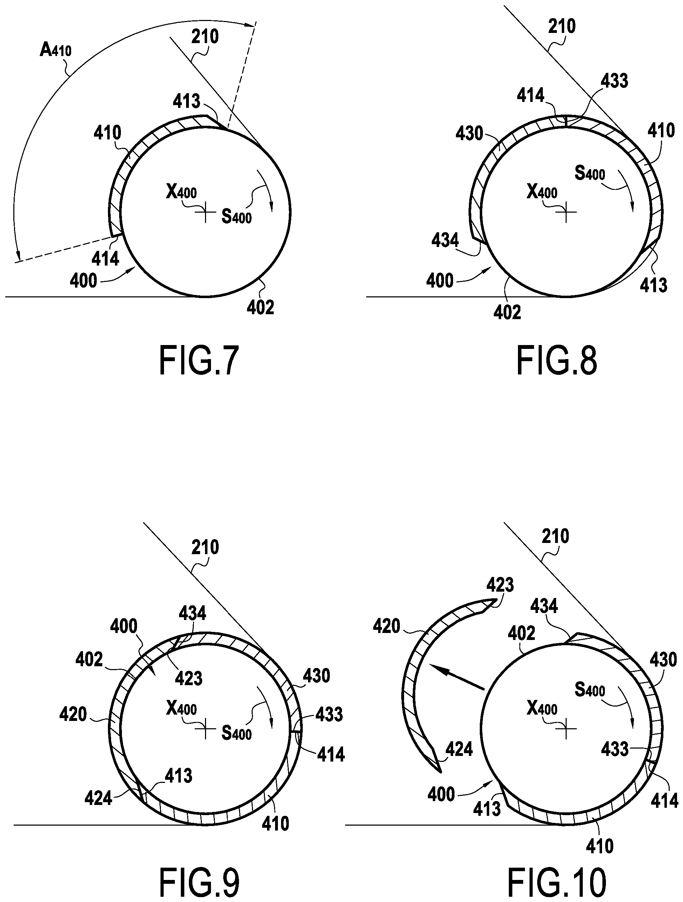

Les figures 7 à 9 montrent comment les secteurs 410, 420 et 430 sont montés sur le rouleau suiveur 400 lors de la mise en forme de la texture fibreuse 210. Les secteurs sont fixés sur la surface externe du rouleau suiveur par exemple au moyen d'organes de serrage comme des vis qui coopèrent avec un taraudage ménagé dans le rouleau (non représentés sur les figures). Comme illustrée sur la figure 7, un premier secteur, ici le secteur 410, est monté sur la portion de la partie 402 du rouleau 400 qui n'est pas en contact avec la texture fibreuse 210. Le secteur 410, qui est le premier à entrer en contact avec la texture 210, comprend un premier bord 413 qui présente de préférence un bord biseauté orienté vers la surface externe du rouleau afin de ne pas mettre la préforme en contact avec une arrête vive du bord du secteur et d'augmenter progressivement la force d'appel des fils de chaîne. On poursuit alors la rotation du rouleau d'appel 400 dans le sens S400 jusqu'à dégager une nouvelle portion de la partie 402 du rouleau d'appel 400 de la zone de contact avec la texture 210 permettant le montage du deuxième secteur 430 (figure 8). Le bord 433 du secteur 430 est placé contre le bord 414 du secteur 410 qui est partiellement en contact avec la texture 210. La rotation du rouleau suiveur 400 dans le sens S₄₀₀ est poursuivie jusqu'à dégager la dernière portion libre de la partie 402 du rouleau 400 de la zone de contact avec la texture 210. Le troisième secteur 420 est alors monté sur le rouleau 400 (figure 9). Le bord 424 du secteur 420 est placé contre le bord biseauté 413 du secteur 410, le bord 424 présentant une forme biseautée complémentaire de celle du bord 413. Le bord 423 du secteur 420 est placé contre le bord 434 du secteur 420.

Les secteurs 410, 420 et 430 sont ajoutés au cours de la formation de la préforme fibreuse lorsque la tension exercée sur la texture fibreuse doit être modifiée, par exemple lorsque la différence entre le profil initial défini par la surface externe du moule et le profil réel sur lequel la texture est enroulée est telle qu'elle peut entraîner des pertes de tension à certaines positions axiales dans la texture.

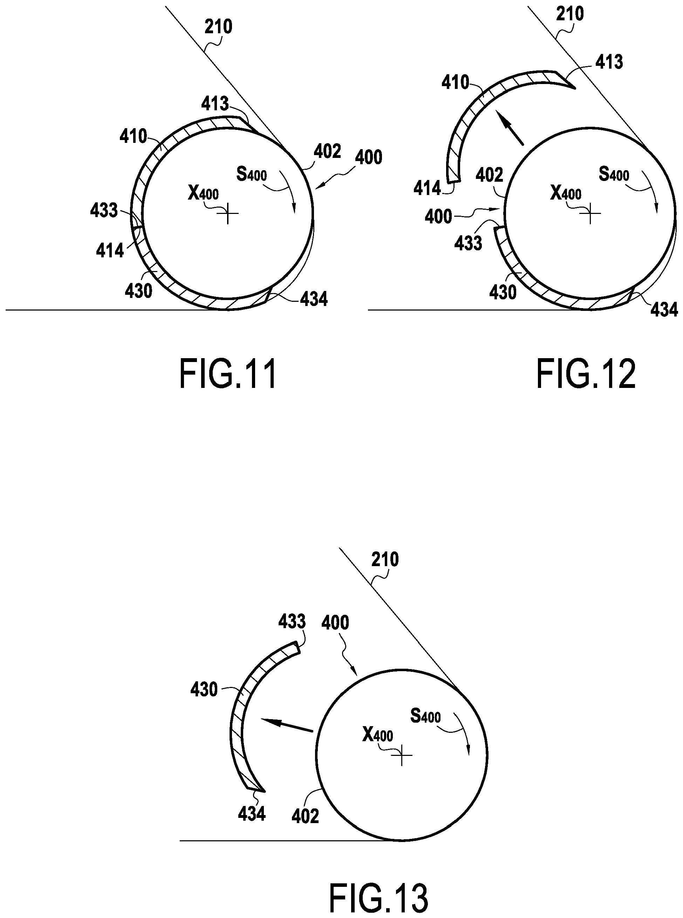

Le retrait des secteurs 410, 420 et 430 s'opère de la même façon comme illustré sur les figures 10 à 13. Au cours de fabrication de la texture fibreuse 210, le premier secteur qui n'est pas en contact avec la texture fibreuse, correspondant ici sur la figure 10 au secteur 420, est retiré. Les deux autres secteurs 410 et 430 sont ensuite retirés l'un après l'autre comme illustrés sur les figures 11 à 13 de manière à réduire l'épaisseur ou le rayon de la partie 402 du rouleau suiveur 400. Le secteur 430, qui est le dernier secteur à être retiré comprend un bord 434 qui présente de préférence un bord biseauté orienté vers la surface externe du rouleau afin de ne pas mettre la préforme en contact avec une arrête vive du bord du secteur, le bord 423 du secteur 420 présentant une forme biseautée complémentaire de celle du bord 434.

Chaque secteur s'étend sur une fraction de la circonférence du rouleau. Il présente une longueur d'arc de cercle, comme la longueur d'arc de cercle A₄₁₀ du secteur 410 représenté sur la figure 7, qui est définie en fonction de la longueur d'arc de cercle de la portion du rouleau suiveur 400 qui n'est pas en contact avec la texture fibreuse 210. Par conséquent, si la texture fibreuse est en contact avec le rouleau suiveur sur une longueur d'arc de cercle peu importante, il est possible d'utiliser des secteurs ayant une longueur d'arc de cercle importante et inversement. Le nombre de secteurs nécessaires pour couvrir toute la circonférence du rouleau suiveur est donc également déterminé en fonction de la longueur d'arc de cercle de la portion du rouleau suiveur qui n'est pas en contact avec la texture fibreuse.

Des secteurs peuvent être utilisés sur un seul rouleau suiveur, comme décrit ci-avant pour le rouleau 400, ou sur plusieurs rouleaux suiveurs, comme sur les rouleaux 400 et 500 décrits ci-avant de manière à modifier localement l'épaisseur du profil en relief de la surface externe du ou des rouleaux suiveurs.

Il est également possible dans le cadre de l'invention de monter plusieurs secteurs les uns sur les autres de manière à augmenter ou réduire progressivement l'épaisseur du profil en relief de la surface externe du ou des rouleaux suiveurs.

Les secteurs sont réalisés en un matériau rigide ou présentant une bonne résistance à la compression comme du métal ou du plastique. Les secteurs peuvent être réalisés par exemple par moulage, par usinage ou par impression 3D.

Par l'utilisation de secteurs permettant de modifier localement l'épaisseur du profil en relief de la surface externe d'un ou plusieurs rouleaux suiveurs lors de la mise en forme d'une préforme fibreuse, l'installation et le procédé de l'invention permettent de mettre en forme des préformes fibreuses de révolution présentant en section radiale un profil évolutif dans lesquelles les pertes ou inhomogénéités de tension sont significativement réduites. Lors de son enroulement sur le moule d'injection, la préforme fibreuse formée présente peu de défauts (vagues, flambements et/ou pincements de fibres, zones de surépaisseurs non désirées, taux volumiques de fibres hors spécification, plis, désalignements, etc.) par rapport à une préforme formée selon l'art antérieur ou les déséquilibres de tension sont plus importants. On réduit ainsi les arrêts inopinés de la machine d'enroulement habituellement nécessaires pour reprendre les défauts tels que des plis ou effondrement de portions (par exemple des brides) de la préforme qui requièrent en outre un retour en arrière de la machine ainsi qu'une intervention d'un ou plusieurs techniciens.

## Revendications

1. Installation pour la mise en forme d'une préforme fibreuse de révolution présentant en section radiale un profil évolutif, comprenant un mandrin de stockage (300) destiné à stocker une texture fibreuse (210) en forme de bande enroulée, un ou plusieurs rouleaux suiveurs (400, 500) et un moule (600) de révolution sur lequel la texture fibreuse (210) est destinée à être mise en forme par enroulement, le ou les rouleaux suiveurs étant placés entre le mandrin de stockage (300) et le moule (600) de révolution, le mandrin de stockage (300), chaque rouleau suiveur (400 ; 500) et le moule (600) présentant sur leur largeur axiale un rayon variable de manière à définir une surface externe ayant un profil en relief, au moins un rouleau suiveur (400) comprenant une pluralité de secteurs (410, 420, 430) fixés de façon amovible sur la surface externe dudit rouleau suiveur, chaque secteur s'étendant sur une fraction de la circonférence du rouleau suiveur (400) et sur tout ou partie de la largeur axiale dudit rouleau suiveur, chaque secteur (410 ; 420 ; 430) présentant en outre au moins une épaisseur déterminée de manière à modifier localement l'épaisseur du profil en relief de la surface externe du rouleau suiveur (400).

2. Installation selon la revendication 1, dans laquelle chaque secteur (410 ; 420 ; 430) présente une épaisseur variable dans le sens axial.

3. Installation selon la revendication 2, dans laquelle chaque secteur (410 ; 420 ; 430) présente une surface interne (412 ; 422 ; 432) ayant une forme correspondant à la partie (402) de la surface externe (401) à profil en relief du rouleau suiveur (400) sur laquelle ledit secteur est fixé.

4. Installation selon l'une quelconque des revendications 1 à 3, dans laquelle au moins un secteur (410) de la pluralité de secteurs comprend un bord biseauté (413) de manière à ne pas mettre la préforme en contact avec une arrête vive du bord d'un secteur ajouté sur le rouleau d'appel.

5. Procédé de mise en forme d'une préforme fibreuse de révolution présentant en section radiale un profil évolutif à partir d'une structure fibreuse (210) obtenue par tissage tridimensionnel ou multicouche entre une pluralité de couches de fils de chaîne (211) liées entre elles par des fils de trame (212), la texture fibreuse (210) étant mise en forme par enroulement sous tension sur un moule (600) de révolution, la texture fibreuse étant déroulée à partir d'un mandrin de stockage (300), la texture fibreuse circulant sur un ou plusieurs rouleaux suiveurs (400, 500) placés entre le mandrin de stockage (300) et le moule (600) de révolution, le mandrin de stockage (300), chaque rouleau suiveur (400 ; 500) et le moule (600) présentant sur leur largeur axiale un rayon variable de manière à définir une surface externe ayant un profil en relief,
comprenant au cours de l'enroulement de la texture fibreuse (210) sur le moule (600) de révolution, l'ajout d'une pluralité de secteurs (410, 420, 430) sur la surface externe (401) d'au moins un rouleau suiveur (400), chaque secteur (410 ; 420 ; 430) s'étendant sur une fraction de la circonférence du rouleau suiveur (400) et sur tout ou partie de la largeur axiale dudit rouleau suiveur, chaque secteur présentant en outre au moins une épaisseur déterminée de manière à modifier localement l'épaisseur du profil en relief de la surface externe du rouleau suiveur (400).

6. Procédé selon la revendication 5, dans lequel chaque secteur (410 ; 420 ; 430) s'étend sur une fraction de la circonférence du rouleau suiveur (400) déterminée en fonction de la portion de contact circonférentielle entre la texture fibreuse (210) et la surface externe dudit rouleau suiveur.

7. Procédé selon la revendication 5 ou 6, dans lequel chaque secteur (410 ; 420 ; 430) présente une épaisseur variable dans le sens axial.

8. Procédé selon l'une quelconque des revendications 5 à 7, dans lequel chaque secteur (410 ; 420 ; 430) présente une surface interne (411 ; 421 ; 431) ayant une forme correspondant à la partie (402) de la surface externe (401) à profil en relief du rouleau suiveur (400) sur laquelle ledit secteur est fixé.

9. Procédé selon l'une quelconque des revendications 5 à 8, dans laquelle au moins un secteur (410) de la pluralité de secteurs comprend un bord biseauté (413).

## Patentansprüche

1. Anlage zum Informbringen eines Rotationsfaservorformlings, der im radialen Querschnitt ein veränderliches Profil aufweist, umfassend einen Lagerdorn (300), der zur Lagerung einer aufgewickelten bahnförmigen Faserstruktur (210) bestimmt ist, eine oder mehrere Folgerollen (400, 500) und eine Rotationsform (600), auf der die Faserstruktur (210) durch Aufwickeln in Form gebracht werden soll, wobei die Folgerolle oder -rollen zwischen dem Lagerdorn (300) und der Rotationsform (600) angeordnet sind, wobei der Lagerdorn (300), jede Folgerolle (400; 500) und die Form (600) über ihre axiale Breite einen variablen Radius aufweisen, um eine Außenfläche mit einem erhabenen Profil zu definieren,
wobei wenigstens eine Folgerolle (400) eine Vielzahl von Sektoren (410, 420, 430) umfasst, die auf der Außenfläche der Folgerolle lösbar befestigt sind, wobei sich jeder Sektor über einen Bruchteil des Umfangs der Folgerolle (400) und über die gesamte axiale Breite der Folgerolle oder einen Teil davon erstreckt, wobei jeder Sektor (410; 420; 430) ferner wenigstens eine Dicke aufweist, die derart festgelegt ist, dass sie die Dicke des erhabenen Profils der Außenfläche der Folgerolle (400) lokal ändert.

2. Anlage nach Anspruch 1, bei der jeder Sektor (410; 420; 430) eine in axialer Richtung variable Dicke aufweist.

3. Anlage nach Anspruch 2, bei der jeder Sektor (410; 420; 430) eine Innenfläche (412; 422; 432) aufweist, die eine Form hat, welche dem Teil (402) der Außenfläche (401) mit erhabenem Profil der Folgerolle (400) entspricht, an welchem der Sektor befestigt ist.

4. Anlage nach einem der Ansprüche 1 bis 3, bei der wenigstens ein Sektor (410) der Vielzahl von Sektoren eine abgeschrägte Kante (413) aufweist, um den Vorformling nicht mit einer scharfen Kante des Randes eines an die Abrufrolle angefügten Sektors in Kontakt zu bringen.

5. Verfahren zum Informbringen eines Rotationsfaservorformlings, der im radialen Querschnitt ein veränderliches Profil aufweist, aus einer Faserstruktur (210), die durch dreidimensionales oder mehrlagiges Weben zwischen einer Vielzahl von Kettfadenlagen (211), welche durch Schussfäden (212) untereinander verbunden sind, erhalten wird, wobei die Faserstruktur (210) durch Aufwickeln unter Spannung auf eine Rotationsform (600) in Form gebracht wird, wobei die Faserstruktur von einem Lagerdorn (300) abgewickelt wird, wobei die Faserstruktur über eine oder mehrere Folgerollen (400, 500) läuft, welche zwischen dem Lagerdorn (300) und der Rotationsform (600) angeordnet sind, wobei der Lagerdorn (300), jede Folgerolle (400; 500) und die Form (600) über ihre axiale Breite einen variablen Radius aufweisen, um eine Außenfläche mit einem erhabenen Profil zu definieren, umfassend
während des Aufwickelns der Faserstruktur (210) auf die Rotationsform (600) das Hinzufügen einer Vielzahl von Sektoren (410, 420, 430) an der Außenfläche (401) wenigstens einer Folgerolle (400), wobei sich jeder Sektor (410; 420; 430) über einen Bruchteil des Umfangs der Folgerolle (400) und über die gesamte axiale Breite der Folgerolle (400) oder einen Teil davon erstreckt, wobei jeder Sektor ferner wenigstens eine Dicke aufweist, die derart festgelegt ist, dass sie die Dicke des erhabenen Profils der Außenfläche der Folgerolle (400) lokal ändert.

6. Verfahren nach Anspruch 5, bei dem sich jeder Sektor (410; 420; 430) über einen Bruchteil des Umfangs der Folgerolle (400) erstreckt, der in Abhängigkeit des Umfangskontaktabschnitts zwischen der Faserstruktur (210) und der Außenfläche der Folgerolle bestimmt wird.

7. Verfahren nach Anspruch 5 oder 6, bei dem jeder Sektor (410; 420; 430) eine in axialer Richtung variable Dicke aufweist.

8. Verfahren nach einem der Ansprüche 5 bis 7, bei dem jeder Sektor (410; 420; 430) eine Innenfläche (411; 421; 431) aufweist, die eine Form hat, welche dem Teil (402) der Außenfläche (401) mit erhabenem Profil der Folgerolle (400) entspricht, an welchem der Sektor befestigt ist.

9. Verfahren nach einem der Ansprüche 5 bis 8, bei dem wenigstens ein Sektor (410) der Vielzahl von Sektoren eine abgeschrägte Kante (413) aufweist.

## Claims

1. An installation for shaping a fiber preform as a body of revolution presenting a profile that varies in radial section, the installation comprising a storage mandrel (300) for storing a fiber texture (210) in the form of a wound strip, one or more follower rollers (400, 500), and a mold (600) in the form of a body of revolution on which the fiber texture (210) is to be shaped by winding, the follower roller(s) being placed between the storage mandrel (300) and the mold (600) in the form of a body of revolution, the storage mandrel (300), each follower roller (400; 500), and the mold (600) presenting radii across their axial widths that vary so as to define outer surfaces having profiles in relief; the installation being **characterized in that** at least one follower roller (400) includes a plurality of sectors (410, 420, 430) releasably fastened on the outer surface of said follower roller, each sector extending over a fraction of the circumference of the follower roller and over all or part of the axial width of the follower roller (400), each sector (410; 420; 430) also presenting at least one thickness that is determined in such a manner as to modify locally the thickness of the profile in relief of the outer surface of the follower roller (400).

2. An installation according to claim 1, wherein each sector (410; 420; 430) presents a thickness that varies in the axial direction.

3. An installation according to claim 2, wherein each sector (410; 420; 430) presents an inner surface (412; 422; 432) having a shape corresponding to the portion (402) of the outer surface (401) of profile in relief of the follower roller (400) on which said sector is fastened.

4. An installation according to any one of claims 1 to 3, wherein at least one sector (410) of the plurality of sectors has an edge (413) that is chamfered so as to avoid putting the preform into contact with a sharp edge at the edge of a sector that has been added to the take-up roller.

5. A method of shaping a fiber preform as a body of revolution presenting a profile that varies in radial section from a fiber structure (210) obtained by three-dimensional or multilayer weaving between a plurality of layers of warp yarns (211) interlinked by weft yarns (212), the fiber texture (210) being shaped by being wound under tension onto a mold (600) in the form of a body of revolution, the fiber texture being unwound from a storage mandrel (300), the fiber texture passing over one or more follower rollers (400, 500) placed between the storage mandrel (300) and the mold (600) in the form of a body of revolution, the storage mandrel (300), each follower roller (400; 500), and the mold (600) presenting radii across their axial widths that vary in such a manner as to define outer surfaces having profiles in relief; the method being **characterized in that**, during the winding of the fiber texture (210) onto the mold (600) in the form of a body of revolution, it comprises adding a plurality of sectors (410, 420, 430) on the outer surface (401) of at least one follower roller (400), each sector (410; 420; 430) extending over a fraction of the circumference of the follower roller (400) and over all or part of the axial width of said follower roller, each sector also presenting at least one thickness that is determined in such a manner as to modify locally the thickness of the profile in relief of the outer surface of the follower roller (400).

6. A method according to claim 5, wherein each sector (410; 420; 430) extends over a fraction of the circumference of the follower roller (400), which fraction is determined as a function of the circumferential fraction of contact between the fiber texture and the outer surface (210) of said follower roller.

7. A method according to claim 5 or claim 6, wherein each sector (410; 420; 430) presents a thickness that varies in the axial direction.

8. A method according to any one of claims 5 to 7, wherein each sector (410; 420; 430) presents an inner surface (411; 421; 431) having a shape corresponding to the portion (402) of the outer surface (401) of profile in relief of the follower roller (400) on which said sector is fastened.

9. A method according to any one of claims 5 to 8, wherein at least one sector (410) of the plurality of sectors has a chamfered edge (413).
